# EUROPÄISCHE PATENTANMELDUNG

(11) **EP 1 586 529 A2**
(43) Veröffentlichungstag der Anmeldung: **19.10.2005**
(21) Anmeldenummer: 05007453.3
(22) Anmeldetag: 05.04.2005
(51) Int. Cl.: B66F 9/065, E02F 3/28

(54) **Telelader, insbesondere Reachstacker**

(30) Priorität: 16.04.2004 DE 102004018645
(71) Anmelder: Liebherr-Werk Nenzing GmbH, 6710 Nenzing (AT)
(72) Erfinder: Mietschnig, Walter, 6708 Vorarlberg (AT)
(74) Vertreter: Laufhütte, Dieter

(57) **Zusammenfassung**

Die Erfindung betrifft einen Telelader, insbesondere Reachstacker, bestehend aus einem Fahrzeugrahmen, an diesem angeordneten Rädern und einem auf diesem verschwenkbar angeordneten Teleskopausleger mit einem Lastaufnahmemittel für den Umschlag von schweren Lasten wie Containern, Trailern, Blech-Coils, Stückgut und ähnlichem. Erfindungsgemäß sind für die angetriebenen Räder jeweils Einzelradnaben mit integriertem Planetengetriebe und hydrostatischem Antrieb vorgesehen.

## Beschreibung

Die Erfindung betrifft einen Telelader, insbesondere Reachstacker, bestehend aus einem Fahrzeugrahmen, an diesem angeordneten Rädern und einem auf diesem verschwenkbar angeordneten Teleskopausleger mit einem Lastaufnahmemittel für den Umschlag von schweren Lasten, wie Containern, Trailern, Blech-Coils, Stückgut und ähnlichem.

Reachstacker sind gummibereifte, mit Dieselmotor und Fahrerkabine ausgestattete Fahrzeuge, ähnlich einem eingefahrenen Autokran. Sie können Container transportieren und stapeln. Die bisher bekannten Reachstacker sind mit einem am Teleskoparm fest verbundenen Containerspreader ausgestaltet, d. h. die Spreaderhöherbewegung wird nur über den Teleskoparm vorgenommen. Bei bekannten Reachstackern sind die Fahrerkabine auf dem Fahrzeug im hinteren Teil fest oder beweglich auf dem Rahmen verbunden angeordnet, was dem Fahrer bei der vorhandenen Konstruktion immer eine gute Sicht auf den mit dem Teleskoparm fest verbundenen Containerspreader erlaubt.

Bislang wurden bei bekannten Teleladern, wie dem vorgenannten Reachstacker, aufgrund der auftretenden hohen Achslasten eine starre, nicht lenkbare Antriebsachse eingesetzt. Die Antriebsachse war mit mittig oder leicht exzentrisch angeordneten Differentialgetrieben und Planetengetrieben in den Radnaben ausgestattet. Diese Differentialgetriebe wurden entweder mechanisch über Gelenkwellen angetrieben oder hydrostatisch mit oder ohne Vorgelegegetriebe über Hydraulikmotoren. Eine betriebsmäßige Bremsung erfolgt bei bekannten Teleladern über trokken oder nasslaufende Lamellenbremsen, die in den Radnaben eingebaut sind. Die Haltebremse besteht in der Regel aus einer federbelasteten Scheibenbremse, die entweder am Differential, der Gelenkwelle oder dem Vorgelegegetriebe angebaut ist.

Als Lenkachse wird bei bekannten Reachstackern eine nicht angetriebene, lenkbare Achse verwendet, die aus einem Achsgehäuse, drehbaren Achsschenkeln und Spurstangen besteht. Zum Ausgleich von Fahrbahnunebenheiten wird vornehmlich eine Pendellagerung, eine sogenannte 3-Punkt-Lagerung für die Lenkachse verwendet. Die an den Lenkachsen angeordneten Räder sind mit und teilweise ohne Betriebsbremse oder Haltebremse ausgestattet. Die Lenkung erfolgt über eine oder mehrere hydraulisch betätigte Lenkzylinder.

Bei der bekannten Ausführung eines Teleladers, vornehmlich eines Reachstackers, wie sie zuvor beschrieben wurde, besteht der Nachteil eines hohen Reifenverschleißes in der Lenkachse, der insbesondere bei starkem Lenkeinschlag in Folge des zentralen Antriebs und der inneren Reibung im Differentialgetriebe entsteht. Darüber hinaus ist zur Übertragung der Antriebskraft auf den Boden eine Differentialsperre erforderlich, wenn sich eine Seite der Antriebsachse auf rutschiger, glatter Fahrbahn befindet. Mit den bekannten Teleladern ist aufgrund der zuvor beschriebenen Achslagerung nur ein herkömmliches Lenken möglich. Ein Querfahren, d. h. ein Fahren von 90 % zum Fahrzeugrahmen, sowie eine Schrägfahrt, der sogenannte Hundegang, sind nicht möglich. Hierdurch ist nur eine eingeschränkte Manövrierfähigkeit der Telelader, d. h. insbesondere der Reachstacker, gegeben. Darüber hinaus ist aufgrund der starren Achsanordnung kein Höhenausgleich beim Fahren auf schräger Ebene möglich.

Aufgabe der Erfindung ist es, Telelader, insbesondere Reachstacker, der eingangs angegebenen Gattung und insbesondere nach dem Oberbegriff des Anspruchs 1, derart weiterzubilden, dass insbesondere der hohe Reifenverschleiß reduziert wird und die Manövrierfähigkeit des Teleladers verbessert wird.

Die Aufgabe wird durch die Kombination der Merkmale des Anspruchs 1 gelöst.

Demnach wird ein Telelader nach dem Oberbegriff des Anspruchs 1 dadurch weitergebildet, dass für die angetriebenen Räder jeweils Einzelradnaben mit integriertem Planetengetriebe und hydrostatischem Antrieb vorgesehen sind. Aufgrund dieser erfinderischen Lösung kann jedes Antriebsrad bzw. jedes Radpaar individuell angesteuert werden. Dadurch ist es möglich, die jeweiligen Antriebsräder mit unterschiedlichen Antriebskräften zu versorgen und dadurch ein Lenkmoment aufzubauen, welches die Lenkbewegung unterstützt. Hierdurch können die Seitenkräfte in den Lenkrädern erheblich bzw. fast vollständig reduziert werden. Der Vorteil der Erfindung liegt in der reduzierten Beanspruchung der Lenkräder und der damit gesteigerten Laufleistung der Räder. Darüber hinaus wird aufgrund dieses Einzelradantriebs die Traktion auch auf rutschiger, glatter Fahrbahn erhöht, da die Räder individuell mit maximal möglichem Antriebsmoment je nach vorhandener Traktion versorgt werden können. Hier ist eine aus dem Stand der Technik bereits bekannte Antischlupfregelung für jedes Einzelrad möglich.

Weitere bevorzugte Ausgestaltungen der Erfindung ergeben sich aus den sich an den Hauptanspruch anschließenden Unteransprüchen.

Demnach können die angetriebenen Räder hydraulisch aufgehängt sein. Diese hydraulische Aufhängung kann ohne Pendellagerung erfolgen. Sie kann aber bevorzugt auch derart ausgestaltet sein, dass sie mit einer Pendellagerung kombiniert ist.

Hierdurch können Fahrzeugschräglagen über die einzelnen Zylinder ausgeglichen werden.

Vorteilhaft kann das Fahrzeug mit statisch bestimmter 3-Punkt-Abstützung gefahren werden, indem die Pendelachse durch Zusammenschaltung von linken und rechten Ausgleichzylindern nachgebildet wird.

Zur Erhöhung der seitlichen Stabilität kann jederzeit auf eine 4-Punkt-Abstützung übergegangen werden. Hierzu wird die Zusammenschaltung des linken und rechten Ausgleichszylinders getrennt.

Um höhere Lasten tragen zu können, kann das Fahrzeug mit einer beliebigen Anzahl von Radsatzgruppen betrieben werden, die entsprechend einer gewollten 3-Punkt-Abstützung oder 4-Punkt-Abstützung zusammenschaltbar sind.

Der Einzelradantrieb kann auch mit Schwenkeinrichtungen ausgestattet sein. Hierdurch wird jede mögliche Manövriervariante ermöglicht, insbesondere wenn alle Räder bzw. Radpaare einzeln angetrieben sind. Neben dem herkömmlichen Kurvenfahren ist ein diagonales, schräges Fahren, der sogenannte Hundegang, möglich. Auch ein Querfahren, d. h. ein Fahren von 90 % zum Fahrzeugrahmen ist auf Wunsch möglich. Schließlich kann der Telelader auch im Stand gedreht werden. Aufgrund dieser verbesserten Manövrierfähigkeit wird das Positionieren der Last erheblich erleichtert.

Weitere Merkmale, Einzelheiten und Vorteile der Erfindung ergeben sich aus den in der Zeichnung dargestellten Ausführungsbeispielen. Es zeigen:
- Fig. 1:: eine schematische Ansicht einer ersten Ausführungsform der Erfindung,
- Fig. 2:: eine schematische Ansicht einer alternativen Ausführungsform der Erfindung,
- Fig. 3:: eine schematische Darstellung einer weiteren Altemative in Ausgestaltung der Erfindung,
- Fig. 4:: eine schematische Darstellung der Radbelastung von Teleladern nach dem Stand der Technik ohne Einzelradantrieb,
- Fig. 5:: eine Darstellung gemäß Fig. 4 mit einem Einzelradantrieb gemäß der vorliegenden Erfindung und
- Fig. 6:: eine schematische Darstellung unterschiedlicher Lenkmöglichkeiten der Räder eines Teleladers nach der vorliegenden Erfindung.

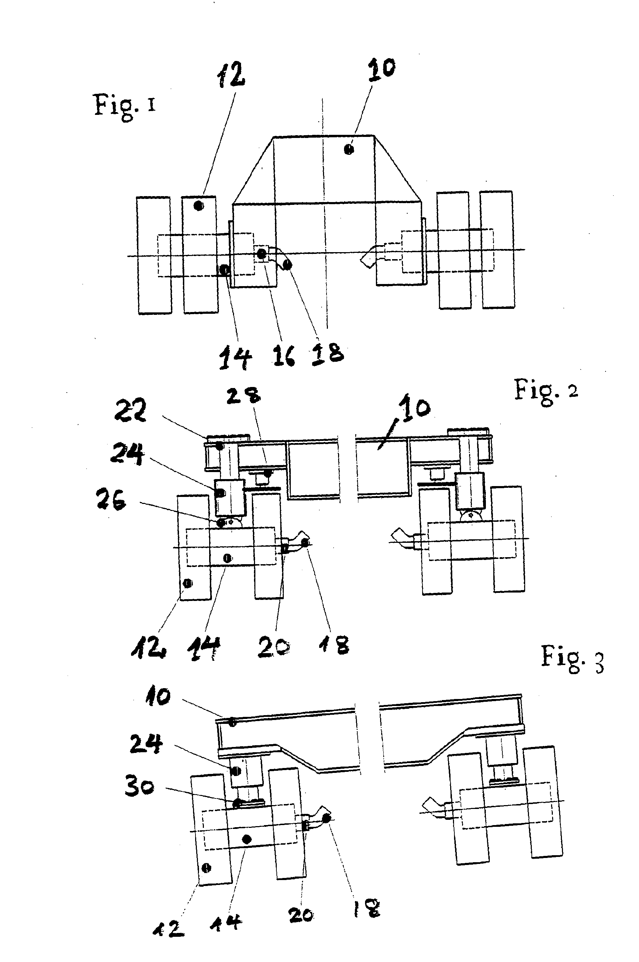

In der schematischen Darstellung gemäß Fig. 1 ist von dem Telelader, beispielsweise einem Reachstacker, der Fahrzeugrahmen 10 gezeigt, an welchem über eine entsprechende Achslagerung jeweils zwei Radpaare 12 getragen sind. Jedem Radpaar ist eine Einzelradnabe 14 mit Planetengetriebe zugeordnet. Den jeweiligen Einzelradnaben mit Planetengetriebe sind Feststellbremsen 16 zugeordnet. Die jeweiligen Radpaare 12 sind über diesen zugeordnete Hydromotoren 18 individuell antreibbar.

In der Darstellung gemäß Fig. 2 ist an dem Fahrzeugrahmen 10 jeweils ein hydraulisch aufgehängter Einzelradantrieb mit Schwenkeinrichtungen angeordnet. Die Doppelräder 12 weisen in gleicher Weise wie in der Ausführungsform gemäß Fig. 1 jeweils Hydromotoren 18 zu ihrem Antrieb, Einzelradplanetengetriebe 14 und jeweils zugeordnete Feststellbremsen 20 auf. Der jeweilige Einzelradantrieb ist hydraulisch über ein Ausgleichskolbenzylinderpaar 22, 24 aufgehängt. Über ein Pendellager 26 ist das Radpaar 12 pendelnd mit dem Ausgleichszylinder 24 verbunden. Ein Lenken der angetriebenen Radpaare 12 erfolgt durch einen in der Fig. 2 schematisch dargestellten Schwenkantrieb 28, der ebenfalls hydraulisch betrieben ist.

In der Fig. 3 ist eine hydraulische Aufhängung des Radpaares 12 entsprechend derjenigen gemäß Fig. 2 gezeigt, wobei hier gleiche Teile wieder gleich benannt sind. Hier ist allerdings anstelle eines Pendellagers 26 eine starre Lagerung der Radpaare 30 vorhanden.

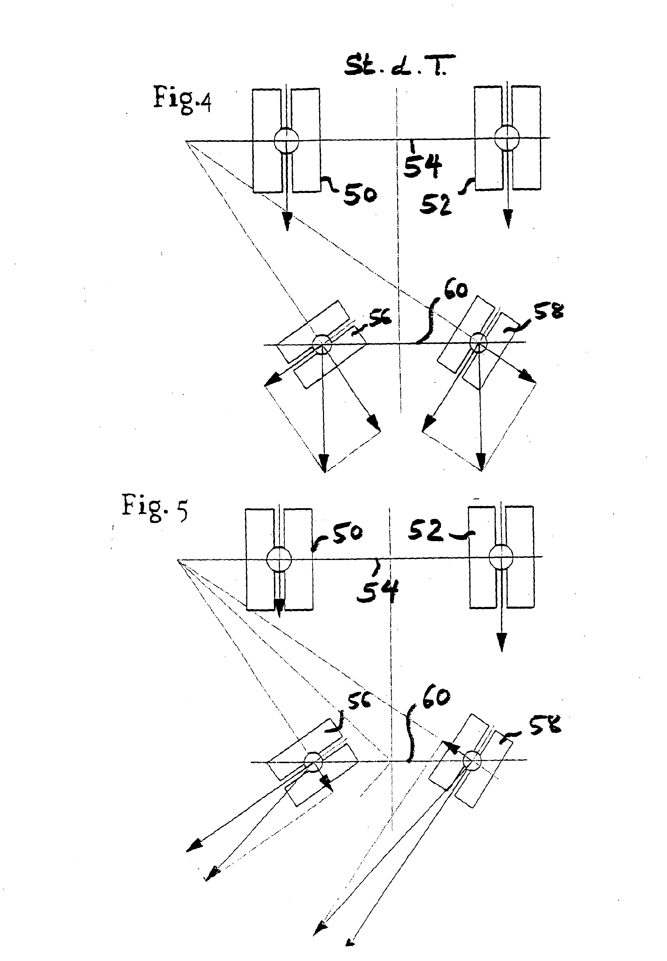

In der Fig. 4 wird die Fahrtbelastung eines Teleladerfahrwerks üblicher Bauart, also ohne Einzelradantrieb, dargestellt. Hier sind die Radpaare 50 und 52 der starren Achse 54 gezeigt. Die Radpaare 50 und 52 werden nach dem Stand der Technik zentral angetrieben. Die ausgelenkten Radpaare 56 und 58 der Lenkachse 60 werden nach dem Stand der Technik, wie er in Fig. 4 dargestellt ist, über eine hier nicht näher dargestellte Achsschenkellenkung ausgelenkt. Hier ergeben sich die entsprechend dem Kräfteparallelogramm aufgezeichneten Reaktionskräfte, die zu einem vergleichsweise großen Abrieb der Doppelräder führen.

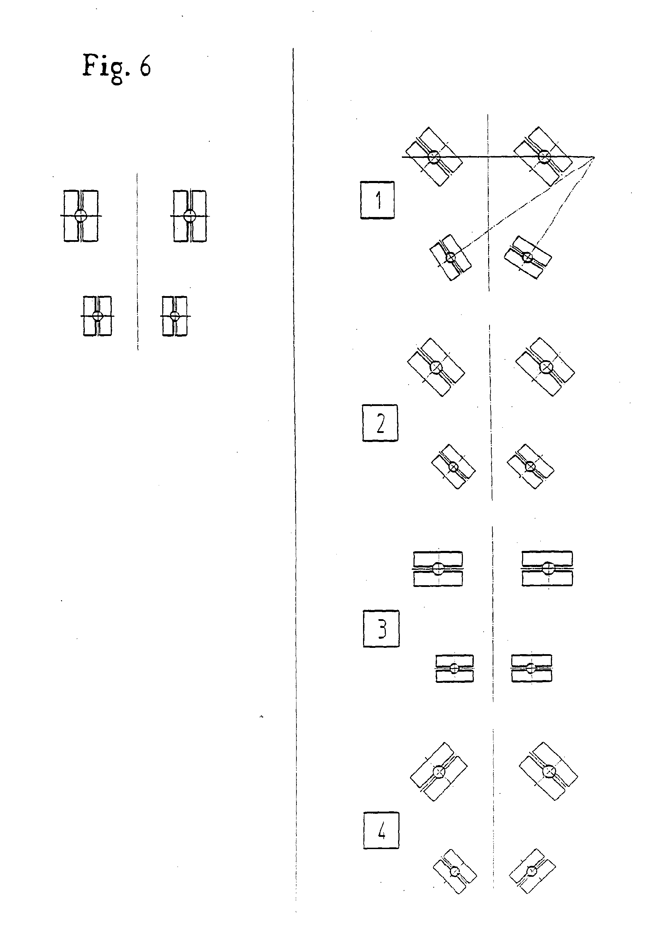

In Fig. 5 ist die vergleichsweise Situation der jeweiligen mit Einzelradantrieb versehenen Doppelräder gezeigt. Anhand der Kraftpfeile wird dargestellt, dass hier für jedes Rad individuell anderer Antriebskräfte einstellbar sind, so dass die sich für die gelenkten Räder 56 und 58 ergebenen Kräfteparallelogramme günstiger sind, wobei augrund der besseren Kraftverteilung ein geringerer Abrieb der gelenkten Radpaare 56 und 58 auftritt. Die Fig. 6 zeigt die vorteilhafte Lenkmöglichkeit von Teleladern, die mit hydraulisch aufgehängtem Einzelradantrieb mit Schwenkeinrichtungen versehen sind. Hier ist im linken Teil der Darstellung die Geradeausfahrt dargestellt. Die Darstellungen 1, 2,3 und 4 zeigen in der Fig. 6 jeweils unterschiedliche Lenkeinschläge der individuell schwenkbaren, d. h. lenkbaren Radpaar. Unter der Nummer 1 ist ein Lenkeinschlag für eine herkömmliche Kurvenfahrt dargestellt, wobei hier ein sehr kleiner Lenkkreis beschrieben werden kann. Die Fig. 2 zeigt den Lenkeinschlag für ein diagonales, schräges Fahren des Teleladers, dem sogenannten Hundegang.

Die Fig. 3 zeigt die Möglichkeit des Querfahrens, d. h. eines Verfahrens um 90 % zum Fahrzeugrahmen.

Fig. 4 zeigt einen Lenkeinschlag, in welchem das Fahrzeug im Stand gedreht werden kann. Insgesamt ergibt sich eine optimale Positionierbarkeit Lasten mittels des entsprechend lenkbaren Teleladers.

## Patentansprüche

1. Telelader, insbesondere Reachstacker, bestehend aus einem Fahrzeugrahmen, an diesem angeordneten Rädern und einem auf diesem verschwenkbar angeordneten Teleskopausleger mit einem Lastaufnahmemittel für den Umschlag von schweren Lasten wie Containem,Trailern, Blech-Coils, Stückgut und ähnlichem,
**dadurch gekennzeichnet,**
**dass** für die angetriebenen Räder jeweils Einzelradnaben mit integriertem Planetengetriebe und hydrostatischem Antrieb vorgesehen sind.

2. Telelader nach Anspruch 1, **dadurch gekennzeichnet, dass** die angetriebenen Räder hydraulisch aufgehängt sind.

3. Telelader nach Anspruch 2, **dadurch gekennzeichnet, dass** die hydraulische Aufhängung der angetriebenen Räder mit einer Pendellagerung kombiniert ist.

4. Telelader nach einem der Ansprüche 2 oder 3, **dadurch gekennzeichnet, dass** die Pendelachse durch Zusammenschaltung von linkem und rechtem Ausgleichszylinder nachbildbar ist, um den Telelader mit statisch bestimmter 3-Punkt Abstützung zu fahren.

5. Telelader nach einem der Ansprüche 2 bis 4, **dadurch gekennzeichnet, dass** er von einer 3-Punkt Abstützung auf eine 4-Punkt Abstützung umstellbar ist.

6. Telelader nach einem der Ansprüche 1 bis 5, **dadurch gekennzeichnet, dass** der Einzelradantrieb mit Schwenkeinrichtungen ausgestattet ist.

7. Telelader nach einem der Ansprüche 1 bis 6, **dadurch gekennzeichnet, dass** alle Räder bzw. Radpaare einzeln angetrieben sind.
